(19) **Europäisches Patentamt**
**European Patent Office**
**Office européen des brevets**

(11) **EP 4 528 665 A1**

(12) **EUROPÄISCHE PATENTANMELDUNG**

(43) Veröffentlichungstag:
26.03.2025 Patentblatt 2025/13

(21) Anmeldenummer: 23198833.8

(22) Anmeldetag: 21.09.2023

(51) Internationale Patentklassifikation (IPC):
**G06V 10/75** (2022.01)   **G06V 10/82** (2022.01)
**G06V 20/52** (2022.01)

(52) Gemeinsame Patentklassifikation (CPC):
**G06V 20/52; G06V 10/7553; G06V 10/82;**
G06V 2201/06

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder: **Siemens Aktiengesellschaft**
**80333 München (DE)**

(72) Erfinder:
• **Köbler, Alexander**
 **90461 Nürnberg (DE)**
• **Thon, Ingo**
 **85630 Grasbrunn (DE)**

(74) Vertreter: **Siemens Patent Attorneys**
**Postfach 22 16 34**
**80506 München (DE)**

(54) **VERFAHREN UND VORRICHTUNG ZUR DETEKTION EINES OBJEKTS MITTELS EINES OBJEKTDETEKTORS AUS EINEM EINGABEBILD MIT GEOMETRISCHEN ZUSATZINFORMATIONEN**

(57)   Die vorgestellte Lösung zielt darauf ab, zusätzliches, verfügbares Wissen über die Geometrie des zu identifizierenden Objekts vorab in das Training des Objekterkennungssystems einfließen zu lassen.

Ziel ist es, die Robustheit zu erhöhen und den Datenbedarf im Vergleich zu rein datengetriebenen Ansätzen zu reduzieren. Gerade für den industriellen Einsatz gehören diese zu den großen Hürden für den Einsatz von KI-Lösungen in kritischen und dynamischen Umgebungen wie dem Shopfloor sowie für deren Einsatz in autonomen Systemen. Auf der anderen Seite ist das Wissen über die Formen, die von Objekterkennungslösungen in diesen Szenarien erkannt werden sollten, oft gut definiert und leicht verfügbar.

Die Erfindung ermöglicht die Nutzung industriell weit verbreiteter Wissensrepräsentationen, um die Anwendung von maschinellen Lernsystemen im industriellen Bereich weiter zu erleichtern.

## FIG 1

EP 4 528 665 A1

**Beschreibung**

Maschinelles Lernen ML findet inzwischen vielfältigen Einsatz in der industriellen Automatisierung. Zu den wichtigsten Aufgaben gehören die Erkennung von Objekten und die Posenschätzung dieser Objekte, beispielsweise in einer Fertigungsanlage auf einem Förderband. Ersteres wird z. B. für die Stückzählung, als Vorbereitungsschritt für andere Aufgaben oder für die Vollständigkeitskontrolle nach der Montage benötigt. Letzteres spielt eine entscheidende Rolle beispielsweise bei der robotergestützten Kommissionierung und der automatisierten Platzierung. Für die meisten sogenannten "Pick&Place" Vorgänge ist diese Erkennung die wesentliche Voraussetzung für den reibungslosen Ablauf und Funktion der Anlage.

Um die Objekte erkennen zu können wird meist ein Kamerasystem genutzt, welches aus einem festen oder veränderlichen Blickwinkel Bilder von der realen Szene aufnimmt.

Die derzeit verwendeten Ansätze des maschinellen Lernens nutzen nun historische oder explizit dafür voraufgenommene Bilder, um ein dediziertes Modells zur Objekterkennung zu trainieren. Um ein zuverlässiges System zu erhalten, ist eine große Anzahl von Beispielen erforderlich, die eine möglichst große Variation an realen Szenarien abdecken. Die Bereitstellung dieser Trainingsdaten beinhaltet zusätzlich immer einen sehr zeitintensiven Schritt der Datenkennzeichnung bzw. Beschriftung, also das zuweisen von sogenannten Labeln.

Als "Labels" werden, insbesondere im Supervised Machine Learning, die Kategorien von Daten bezeichnet, in die die Trainingsdaten eingeordnet werden sollen. Somit sind Labels, auf Deutsch "Beschriftung" oder "Kategorie", der Output auf den ein Machine Learning Modell trainiert wird.

Darüber hinaus neigen ML Modelle dazu, Abkürzungen oder falsche Merkmale zu lernen, wenn diese die Klassifizierung der historisch aufgezeichneten Trainingsdaten erlauben. Die aus Korrelationen in den Trainingsdaten gelernten Merkmale sind jedoch gegebenenfalls nicht tatsächlich beschreibend für die Klassifizierung der Objekte und somit später schon bei kleineren Änderungen in den Eingabedaten möglicherweise nicht mehr nützlich, daher resultieren daraus keine robusten Systeme in dynamischen Umgebungen wie Fertigungsanlagen.

Sogenannte Computer-Vision-Modelle sind so konzipiert, dass sie visuelle Daten auf der Grundlage von Merkmalen und Kontextinformationen übersetzen, die während des Trainings ermittelt wurden. Dies ermöglicht es den Modellen, Bilder und Videos zu interpretieren und diese Interpretationen auf Vorhersage- oder Entscheidungsfindungsaufgaben anzuwenden. Computer-Vision-Modelle konzentrieren sich dabei oft auf Texturen und Farben, die stark von Umwelteinflüssen wie Lichtveränderungen oder dem verwendeten Kamerasystem beeinflusst werden.

Bei den meisten Objekterkennungsaufgaben im industriellen Umfeld geht es um die Detektion sehr spezifischer, bereits bekannter Objekte. Die Formen dieser Objekte werden beispielsweise explizit in technischen Zeichnungen definiert, die während des Konstruktionsprozesses verwendet oder von externen Lieferanten zur Verfügung gestellt werden. Auch wenn solche Zeichnungen nicht verfügbar sind, kann der Mensch die meisten zu erkennenden Objekte durch geometrische Formen wie im einfachsten Fall beispielsweise Rechtecke oder Dreiecke beschreiben.

Die meisten aktuellen Lösungen für Objekterkennungsaufgaben basieren auf Deep-Learning-Modellen. Das Training dieser Modelle erfolgt mit einer großen Menge an Daten, die explizit für die Zielaufgabe gesammelt wurden. Die Daten bestehen dabei aus Eingabebildern sowie Beschriftungen (Labels), die den Ort und die Klassen der interessierenden Objekte im Bild beschreiben. Diese Objektdetektionsansätze erhalten keinen Hinweis über die Form der Objekte, die detektiert werden sollen. Dies kann dazu führen, dass sich das Modell auf nicht robuste Merkmale verlässt, z. B. bezüglich der Textur oder Farbe des Objekts.

Eine Möglichkeit, Forminformationen explizit in das Training von Machine-Learning-Modellen einzubeziehen, besteht darin, die Objekterkennungsaufgabe durch eine Posenschätzung zu ersetzen und den Inhalt des Bildes mit 3D-Objekten abzugleichen, was aber viel rechenintensiver ist. Für viele Aufgaben ist die detaillierte Ausgabe der Objektpose zudem nicht erforderlich.

Alternativ kann auch eine Objektsegmentierung durchgeführt werden, allerdings erhöht das Generieren von Segmentierungsmasken den Beschriftungsaufwand der Trainingsdaten drastisch und die in der Ausgabe enthaltenen Informationen über die genauen Umrisse der Objekte sind in der schlussendlichen Anwendung dennoch oft nicht von Relevanz. Darüber hinaus ist die Objektsegmentierung auch aufgrund der Größe und der Inferenzzeit des jeweiligen Modells rechenintensiver.

Es ist Aufgabe der Erfindung, ein Verfahren und eine Vorrichtung anzugeben, die eine gegenüber dem Stand der Technik verbesserte Objekterkennung bei zumindest gleichbleibendem oder reduziertem Rechenaufwand von Objekterkennungssystemen. Es ist weiterhin Aufgabe der Erfindung, die Robustheit des resultierenden Objekterkennungssystems zu erhöhen um den Einsatz solcher Systeme in kritischen und dynamischen Umgebungen wie dem Shopfloor zu erleichtern.

Die Aufgabe wird gelöst durch ein Verfahren zur Detektion eines Objekts gemäß den Merkmalen des Patentanspruchs 1.

Die Aufgabe wird weiterhin gelöst durch eine Vorrichtung gemäß Patentanspruch 9, einem Computerprogrammprodukt und einem Trainingsverfahren gemäß der weiteren, unabhängigen Ansprüche.

Weitere vorteilhafte Ausführungsformen ergeben sich aus den Unteransprüchen.

Die im Folgenden vorgestellte Lösung zielt darauf ab, zusätzliches, verfügbares Wissen (auch als privilegiertes Wissen bekannt) über die geometrische Form des zu identifizierenden Objekts vorab als Zusatzinformation in das Training des Objekterkennungssystems einfließen zu lassen. Dieses Privilegierte Wissen reicht von einfachen Formbeschreibungen, mittels beispielsweise Informationen zu Kantenlängen, Eckpunkten (auch mit Kantenlängen), Umfang, Winkel oder andere einfach zu definierende Informationen. Es reicht hin bis zu komplizierteren Repräsentationen von geometrischen Formen, wie beispielsweise technische Zeichnungen, CAD Zeichnungen, auch dreidimensional, des Objekts.

Während der Trainingsphase werden diese Zusatzinformationen zum Training verwendet. Hierdurch wird in der, beispielsweise auch im Vergleich zur Segmentierung oder Posenschätzung, der Aufwand verringert.

Dadurch wird der Datenbedarf während des Trainingsprozesses reduziert.

Die Abhängigkeit des Modells von ganzheitlichen Forminformationen wird erhöht und die Abhängigkeit von fehlerhaften Texturmerkmalen wird reduziert.

Es wird möglich, unterschiedliche Grade des Wissens, beispielsweise unterschiedlichen Detaillierungsgrades über die Form der zu erkennenden Objekte, in das Training einzubeziehen. So können auch konzeptionelle Beschreibung der Form oder Formen, die beispielsweise aus bestimmten technischen Zeichnungen extrahiert wurden, verwendet werden.

Die Robustheit von Objekterkennungssystemen gegenüber Umweltveränderungen in dynamischen Produktionsumgebungen wird erhöht.

Gerade für den industriellen Einsatz gehören Anforderungen an Robustheit und Datenbedarf zu den großen Hürden für den Einsatz von KI-Lösungen in kritischen und dynamischen Umgebungen wie dem Shopfloor sowie für deren Einsatz in autonomen Systemen. Auf der anderen Seite ist das Wissen über die Formen, die von Objekterkennungslösungen in diesen Szenarien erkannt werden sollten, oft gut definiert und leicht verfügbar.

Die Erfindung ermöglicht die Nutzung industriell weit verbreiteter Wissensrepräsentationen, um die Anwendung von maschinellen Lernsystemen im industriellen Bereich weiter zu erleichtern.

Die Erfindung und ihre Ausgestaltungen werden durch die Figu-ren dargestellt, Dabei zeigt

Figur 1    ein Beispiel einer Palette mit den ergänzten Informationen,
Figur 2    einen beispielhaften Prozessablauf und
Figur 3    einen alternativen Prozessablauf.

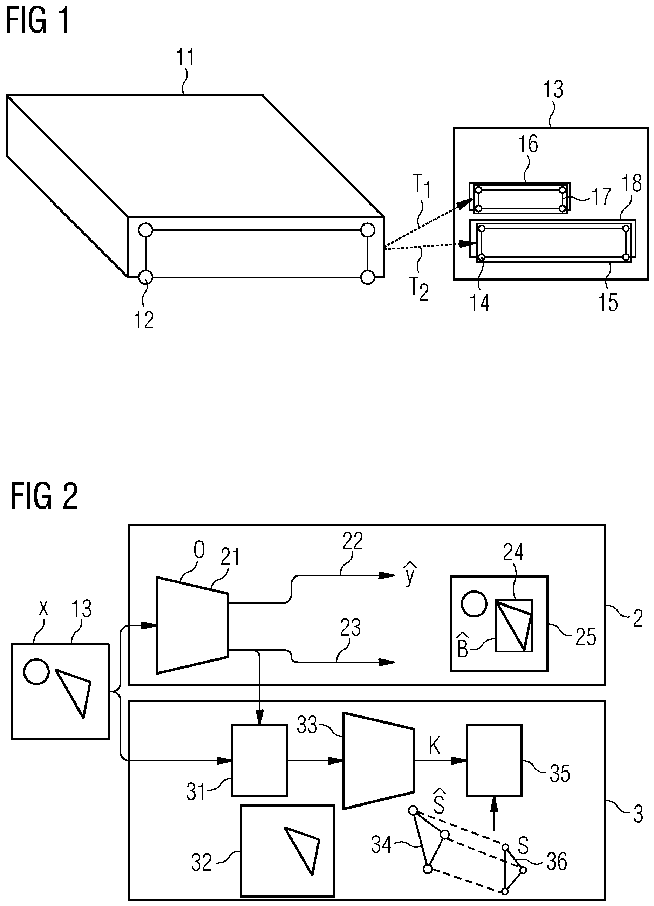

In Figur 1 ist eine beispielhafte Verwendung für die Erfindung dargestellt, weitere Beispiele für Einsatzbereiche finden sich weiter unten in der Beschreibung.

Gezeigt wird die Erfassung von Transporthilfen wie Paletten 11, um deren Hantieren durch beispielsweise autonome Fahrzeuge zu ermöglichen. Normierte Paletten (oder auch Boxen) werden häufig verwendet, beispielsweise in Lagern, um Waren und Zwischenprodukte auch in größeren Mengen in normierter Form aufzunehmen und für einen Weitertransport (oder eine Weiterverarbeitung) zur Verfügung zu stellen.

Eine Palette weist in der Regel einen normierten Eingriffsbereich 12 auf, welcher zur Aufnahme und dem Transport der Palette, beispielsweise durch einen Gabelstapler, verwendet wird und sich zumeist auch immer an der gleichen Stelle der Palette befindet. Die Paletten können in verschiedenen Orientierungen zu einer erfassenden Kamera stehen, und die Umgebungsbedingungen wie Entfernung des Objekts zur Kamera oder Lichtbedingungen sind dabei häufig sehr fluktuierend, weshalb eine erhöhte Anforderung an die Robustheit des Detektionssystems gestellt wird.

Um eine Palette zum Transport aufzunehmen, muss dieser Eingriffsbereich zuvor sicher erkannt werden. Die Position des ermittelten Eingriffsbereichs 12 kann dann beispielsweise in einem, dem hier vorgestellten Verfahren nachgeschalteten, Prozess zur Steuerung der Aufnahme der Palette genutzt werden, genutzt durch ein AGV (Autonomous Guided Vehicle), was hohe Anforderungen an die Zuverlässigkeit, Robustheit sowie die Rechengeschwindigkeit des Detektionssystems stellt.

Die für diesen Anwendungsfall zu erkennende Form kann aus dem 3D-Modell der jeweiligen Palette 11 abgeleitet werden. In dem beispielhaft dargestellten aufgenommenen Bild 13 werden mehrere Paletten in 2D gezeigt, welche übereinandergestapelt sind. Zu erkennen ist zunächst die jeweilige Palette 16, 18 und dann der zugehörige Eingriffsbereich 17.

Das Verfahren verwendet dabei eine Transformation von 3D nach 2D, T1 und T2 stellen dabei die Transformationen der einzelnen zu erkennenden Objekte dar. Dabei wird der jeweils zu identifizierende Bereich für die vorgestellte Methode während der Trainingsphase zusätzlich zu dem Begrenzungsrahmen 15, welcher die Zielausgabe des Objektdetektionssystems auch während der Produktivphase ist, auch durch die Eckpunkte 14 als sogenannte Schlüsselpunkte umschrieben.

Eingabedaten Bild 13:

Das Training eines Objektdetektors wird durch eine vordefinierte Referenz basierend auf Schlüsselpunkten und deren relativer Lage zueinander der zu untersuchenden Objekte unterstützt, die durch Vorgabe in Form von sogenannten privilegierten Informationen, beispielsweise durch die manuelle Definition einer geometrischen Form oder aus technischen Zeichnungen, z. B. CAD-Modellen, extrahiert werden können. Solche technischen Zeichnungen sind für fast alle Objekte verfügbar, die in Produktions- und Fertigungsprozessen gehandhabt werden, sowohl Hilfsmittel, Werkzeuge als auch die Werkstoffe selbst.

Zusätzlich zu diesen privilegierten Informationen über die geometrische Form der zu detektierenden Objekte können dem System drei Datensätze zur Verfügung gestellt werden mit verschiedenen Graden an Beschriftungsdetails:

(1) Bilder mit Begrenzungsrahmen (sogenannte "bounding box") und Schlüsselpunkten ("key points"), 14
(2) Bilder mit Begrenzungsrahmen, 15 oder
(3) Bilder ohne zusätzliche Anmerkungen.

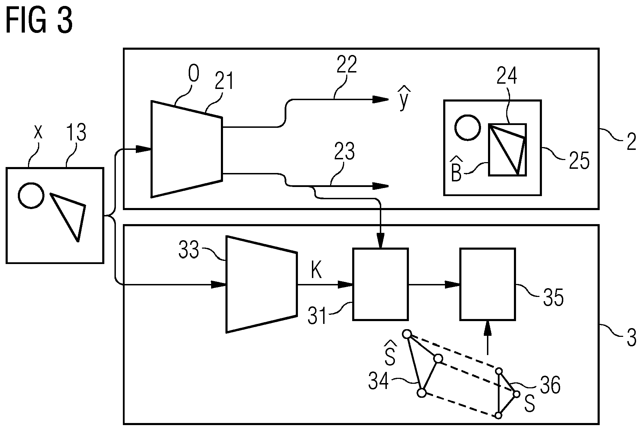

Figur 2 zeigt beispielhaft eine Übersicht über einen möglichen Ablauf (Algorithmus) des Verfahrens in den einzelnen Schritten. Ein alternativer Ablauf ist in Figur 3 dargestellt.

Um die geometrische Form und die Schlüsselpunkte als privilegierte Informationen in das Training des Zielobjekterkennungsmodells einzubeziehen, wird als Hilfsaufgabe eine zusätzliche Schlüsselpunkt- (Key-Point) und eine Matching-Aufgabe definiert. Anders als der Objektdetektor 0 im oberen Kasten 2, wird der Schlüsselpunkt (Key Point)-Detektor K nur während des Trainings, siehe unterer Kasten 3, eingesetzt.

Im Training werden Bounding Boxen 25 vorgegeben, um das Modell zu optimieren mit dem sie die Objekte in der realen Anwendung selbst finden zu können. Das Objekt Detektierungssystem soll dann im Einsatz sowohl Bounding Box als auch zugehörige Klasse ausgeben. In dem dargestellten Beispiel handelt es sich um die Box um das Dreieck und die Klasse "Dreieck". Als Eingabe wird ein aufgenommenes Bild 13 verwendet, welches beispielhaft einfache geometrische Objekte zeigt, im dargestellten Fall einen Kreis und ein Dreieck. Diese Bilder werden beispielsweise in einer Fertigungsanlage von einem Fließband aufgenommen, welches Objekte transportiert die aufgenommen und kommissioniert werden sollen (Pick & Place). Gesucht ist in dem Beispiel am Ende die Form Dreieck.

Für das Training des Gesamtsystems ergibt sich damit das Optimierungsziel $\mathcal{L}$ zu:

$$\mathcal{L} = \mathcal{L}_{CE} + \mathcal{L}_{loc} + \mathcal{L}_{geo} + \mathcal{L}_{KP} .$$

$\mathcal{L}_{CE}$ und $\mathcal{L}_{loc}$ sind häufig verwendete Verlustterme (loss terms) für Objekterkennungsaufgaben, um die Klassifizierung der Objekte hinsichtlich der korrekten Klassenbezeichnung zu bzw. die Position des entsprechenden Begrenzungsrahmens zu optimieren. $\mathcal{L}_{geo}$ quantifiziert die Abweichung der detektierten Form und der spezifizierten Referenz in Bezug auf Schlüsselpunkte und deren relative Lage zueinander. $\mathcal{L}_{KP}$ wird zur Optimierung der Position der Schlüsselpunkte selbst verwendet.

Die verschiedenen Datensätze, die zuvor beschrieben wurden, können während des Trainings entweder iterativ, simultan oder sequenziell verwendet werden.

Wenn sie beispielsweise sequenziell verwendet werden, werden Beschriftungen für die erwarteten Schlüsselpunkte verwendet, um das Training warm zu starten, wobei für eine erste Trainingsphase ein zusätzlicher Verlust $\mathcal{L}_{KP}$ für die Schlüsselpunkterkennung hinzugefügt wird. Dieser Verlust kann durch eine einfache Distanzmetrik zwischen den wichtigsten Ground-Truth-Punkten und den erkannten Punkten definiert werden, z. B. Mean Squared Error.

Nach der anfänglichen Aufwärmphase kann sich das Trainingsziel reduzieren auf

$$\mathcal{L} = \mathcal{L}_{CE} + \mathcal{L}_{loc} + \mathcal{L}_{geo}$$

Durch diese sequenzielle Nutzung der Datensätze ist nur für einen Teil der Daten (Datensatz (1)) die Vorgabe von Schlüsselpunkten notwendig. Dies kann den Aufwand für das Beschriften der Trainingsbeispiele drastisch verringern.

In einer zwischenliegenden Phase kann der Verlust jedoch auch lediglich auf $\mathcal{L}_{geo}$ reduziert werden. Hiermit kann auch für den Datensatz (3) ohne Beschriftungen ein Signal zur Optimierung der Modelle erzeugt werden.

Die Nutzung von Bildern ohne extra Labelling im Training bedeutet einen deutlich geringeren Aufwand, das Labeln von Trainingsdaten ist sehr rechenintensiv und zeitaufwändig.

Der Unterschied zwischen detektierten Objekten und ihrer erwarteten vordefinierten Form wird mittels $\mathcal{L}_{geo}$ als Teil der Verlustfunktion ausgedrückt und dient dabei bei der Optimierung der Schlüsselpunkte, aber wird auch als Fehler in der Objekterkennung durch den Objektdetektors O propagiert und zu dessen Optimierung genutzt, falls das detektierte Objekt nicht der Referenz entspricht.

Für jeden gefundenen Begrenzungsrahmen des Objektdetektors O werden die ausgeschlossenen Objekte mit Hilfe der Objektmaskierung aus dem Eingabebild maskiert und nur ein Satz $\mathcal{S}$ von Schlüsselpunkten, die den eingeschlossenen Objekten entsprechen, wird von K erkannt.

Die erkannten Schlüsselpunkte werden dann vom Geometrie-Matcher mit der definierten geometrischen Form abgeglichen. Eine geeignete Kostenfunktion $\mathcal{L}_{geo}$ wird dabei verwendet, um die Verschiebung zwischen der bereitgestellten Geometrie und den detektierten Schlüsselpunkten zu quantifizieren und die Optimierung des Objektdetektors sowie des Schlüsselpunktdetektors zu steuern. Diese Kostenfunktion bestraft auch das Vorhandensein zusätzlicher erkannter Schlüsselpunkte oder das Fehlen erforderlicher Punkte für die Anpassung an die jeweilige geometrische Form.

Die Formulierung von $\mathcal{L}_{geo}$ kann z. B. wie folgt erfolgen:
Um mehrere wahrscheinlich unvollständige Objekte oder falsche Schlüsselpunkterkennungen in einem Begrenzungsrahmen zu berücksichtigen, ist vor der Berechnung der Abgleichskosten (matching cost) eine Filterung nach den Schlüsselpunkten erforderlich, wenn die Anzahl der Schlüsselpunkte in $\hat{S}$ und S unterschiedlich ist. Verwenden Sie z. B. für alle Teilmengen Ŝ der Länge n in $\mathcal{S}$, wobei $\mathcal{S}$ die Menge aller Schlüsselpunkte im aktuellen Frame und n die Anzahl der Schlüsselpunkte in der vordefinierten Form ist, diejenige mit den minimalen Kosten:

$$T, \hat{S} = arg\min_{T; \hat{S} \in \mathcal{S}} d(\hat{S}, TS)$$

Der Abstand d zwischen den geometrischen Formen kann definiert werden als Transportkosten von S nach Ŝ und kann z. B. durch den Wassersteinabstand ausgedrückt werden.

Für M erkannte Begrenzungsrahmen B ergibt sich der geometrische Verlustterm zu:

$$\mathcal{L}_{geo} = \sum_{b=1}^{M} d(\hat{S}_b, TS)$$

Abhängig von der Darstellung der Referenzform dient die Transformation entweder

(a) als abstrakte Projektion von 3D-Schlüsselpunkten, die eine Darstellung der geometrischen 3D-Form darstellen, in die Ebene der Kameraansicht oder

(b) als Möglichkeit 2D-Schlüsselpunkte in eine potenziell anders skalierte und verzerrte Ansicht zu überführen.

Die Realisierung (a) ermöglicht es, die benötigten Schlüsselpunkte und deren Lage aus sehr detailgetreuen Darstellungen (bezogen auf die Repräsentation der Daten, z. B. CAD Daten) von geometrischen 3D-Formen zu extrahieren, ohne die erwartete Rotation und damit die Ansicht der Kamera auf das Objekt anzugeben. Diese Art der Darstellung kann aus häufig verwendeten technischen Zeichnungen übernommen werden, die eine ganzheitliche Sicht auf das Objekt zeigen, oder sogar automatisch aus computergestützter Konstruktions- oder Simulationssoftware.

Um unterschiedliche Projektionen der Referenzform im 3D-Raum in die 2D-Kameraansicht zu handhaben, wird die Projektionsmatrix T so genutzt, dass der Abstand zwischen den definierten 3D-Schlüsselpunkten S, die im 2D-Bild TS projiziert werden, und den detektierten Schlüsselpunkten Ŝ innerhalb des Begrenzungsrahmens im Bild minimal ist. Um die Transformation als Matrixmultiplikation zu realisieren, werden S und Ŝ hier folgend als homogene Koordinaten dargestellt.

$$T = arg\min_{T} d(\hat{S}, TS)$$

Mit T beispielsweise als

$$T = K \begin{bmatrix} R_{3\times3} & t_{3\times1} \\ 0_{1\times3} & 1 \end{bmatrix}$$

wobei K die feste intrinsische Matrix der verwendeten Kamera ist und die Matrizen R_(3×3) und t_(3×1) die extrinsischen Parameter der Projektion darstellen. Diese extrinsischen Parameter sind optimiert, um die Kosten für die Abbildung der im 2D-Raum projizierten geometrischen Form TS auf die detektierten Schlüsselpunkte Ŝ zu minimieren.

Die Realisierung (b) ermöglicht die Verwendung von Darstellungen geometrischer Formen mit geringerer Genauigkeit, wie z. B. einzelne 2D-Ansichten und vordefinierte Schlüsselpunkte eines tatsächlichen Produkts oder sogar abstrakte Spezifikationen von Formen, wie beispielsweise das Konzept eines Rechtecks oder Dreiecks.

Die Transformationsmatrix T berücksichtigt dabei Verzerrungen, Skalierungen und unterschiedliche Positionen des Objekts im Bildausschnitt, die sich aus unterschiedlichen Kamerapositionen oder ungenauen Vorgaben der Referenzform ergeben. Sie kann als beliebige Bildtransformationsmatrix definiert werden

$$T = \begin{pmatrix} t_{11} & t_{12} & t_{13} \\ t_{21} & t_{22} & t_{23} \\ 0 & 0 & 1 \end{pmatrix}$$

Hier werden die Elemente optimiert, um die Transportkosten zwischen den erkannten Schlüsselpunkten und der angegebenen Geometrie zu minimieren.

$$T = arg\min_{T} d(\hat{S}, TS)$$

T kann als eine Kombination verschiedener affiner Transformationen (Rotation R, Translation Tr, Shear Sh, Scale Sc, ...) definiert werden, um die Interpretierbarkeit des Mappings zu erhöhen und die Transformationen einzuschränken, z.B. um nur einen bestimmten Grad an Rotation sowie eine Translation zuzulassen:

$$T = Tr\,R$$

Wobei

$$R = \begin{pmatrix} \cos(\gamma) & -\sin(\gamma) & 0 \\ \sin(\gamma) & \cos(\gamma) & 0 \\ 0 & 0 & 1 \end{pmatrix}$$

und der geometrische Verlust ergibt sich zu

$$T = \arg\min_T d(\hat{S}, TS)$$

$$\text{s.t. } \gamma < \frac{1}{2\pi},$$

Beschränkung der zulässigen Drehung der vordefinierten geometrischen Form auf 45°.

In einfachen Worten gesagt, haben wir die Hauptaufgabe ("main task") 2 im oberen Kasten, hier wird das Bild 13 als Eingabe verwendet und vom Objektdetektor 21 ausgewertet, als Ergebnis 25 gibt es das Eingabe-Bild, ergänzt um eine Begrenzungs-Box um das zu erkennende Objekt 24.

Der zweite Kasten 3 zeigt die Hilfsaufgabe während der Trainingsphase, in der der Abgleich (geometry matching) 35 mit einer Referenz-Geometrie 34, 36 durchgeführt wird. Dem vorgeschaltet ist ein Schlüsselpunktdetektor 33 und ein Maskierungs-Algorithmus 31, welcher ggf. vorhandene unpassende Objekte ausmaskiert und so das Erkennen von Lage und Pose des gesuchten Objekts vereinfacht. Die Reihenfolge kann hier variieren, wie man in Figur 3 sieht.

Figur 3 zeigt eine zweite Realisierungsmöglichkeit des Verfahrens.

Im Vergleich zu dem in Figur 2 dargestellten Verfahren wird die Reihenfolge der Funktionen Objekt-Maskierung ("Object masking") 31 und Schlüsselpunkt-Erkennung ("keypoint detection") 33 während der Trainingsphase 3 vertauscht.

Der Objektdetektor O und der Keypointdetektor K teilen sich hier einen Teil der optimierbaren Parameter, sodass die Optimierung bezüglich eines Fehlers in den Schlüsselpunkte und deren relativer Lage zueinander auch einen Einfluss auf die Optimierung der Begrenzungsrahmen und Klassenbezeichnung hat.

Nach der Trainingsphase wird die Hilfsaufgabe entfernt und nur noch der Objektdetektor zur Lösung der anstehenden Aufgabe verwendet.

Im Folgenden werden weitere Beispiele beschrieben, für die das beschriebene Verfahren zum Einsatz kommen kann.

Dabei ist zu sehen: Für aktuelle Systeme ergibt sich ein Kompromiss zwischen den beiden Zielen, der erleichtert werden soll:

- der Berechnungsgeschwindigkeit des Verfahrens und
- der Robustheit des Verfahrens.

Ein weiteres Anwendungsbeispiel für das vorgeschlagene Verfahren ist die Etikettendetektion:

Etiketten werden in vielen Logistikanwendungen zur Identifikation von Fracht wie Paketen oder Paletten genutzt. Zum Automatisieren der verschiedenen Transportabläufe ist es dabei wichtig, die Informationen auf den Etiketten automatisch auslesen zu können. Da die Transportgüter häufig in verschiedenen Orientierungen zu der erfassenden Kamera stehen, muss dafür zuerst das Etikett detektiert werden, wozu ein Objektdetektionsmodell genutzt werden kann. Die Umgebungsbedingungen wie Entfernung des Objekts zur Kamera oder Lichtbedingungen sind dabei häufig sehr fluktuierend, weshalb eine erhöhte Anforderung an die Robustheit des Detektionssystems gestellt wird.

Die Form der Etiketten kann erfindungsgemäß sehr einfach als Rechteck definiert und zur Unterstützung des Trainings genutzt werden, um die Robustheit des Systems zu erhöhen.

Ein weiteres Anwendungsbeispiel für das Verfahren ist die Objektdetektion z. b. auf einem Fließband: Eine häufige Anwendung für Objektdetektionssystemen in der Industrie ist das Erkennen und das Zählen von Objekten auf einem Fließband. Aufgrund der hohen Durchsatzrate stellen diese Anwendungen eine starke Anforderung an die Inferenzzeit des Detektionssystems, was den Einsatz von Methoden wie Objektsegmentierung, welche die Form der Objekte während der Inferenz beachten, erschwert. Wenn die Erkennung nicht schnell genug durchgeführt wird, dann läuft das Fließband weiter und das Objekt gerät aus dem Einflußbereich des Greifers, und fällt am Ende - im schlechten Fall, vom Fließband herunter. In vielen Fällen stellen die zu erkennenden Objekte Produkte dar, von denen 3D Modelle entweder im eigenen oder im Entwicklungsprozess eines Zulieferers entworfen wurden und daher vorhanden sind. So wird ermöglicht, diese Forminformationen zu nutzen und gleichzeitig die Vorteile von Objektdetektion in Bezug auf niedrige Inferenzzeiten beizubehalten.

**Patentansprüche**

1. Computer implementiertes Verfahren in einer industriellen Anlage zur Detektion eines Objekts (17) mittels eines Objektdetektors (21) aus einem Eingabebild (13), durch ein neuronales Netz,

   wobei das Objekt durch geometrische Formen umschrieben werden kann, und
   dem System in einer Trainingsphase Zusatz-Informationen (36) in Darstellung einer geometrischen Referenzform des gesuchten Objekts erhält,

**dadurch gekennzeichnet, dass** dem System während der Trainingsphase Daten mit mindestens einem der folgenden Grade an Beschriftungsdetails zur Verfügung gestellt werden:

- Bilder mit Begrenzungsrahmen (15) und Schlüsselpunkten (14) des Objekts,
- Bilder mit Begrenzungsrahmen des Objekts,
- Bilder ohne zusätzliche Anmerkungen, wobei

diese Datensätze, während des Trainings iterativ, simultan oder sequenziell verwendet werden können,
und wobei
das trainierte neuronale Netz (21) in der Produktivphase zur Steuerung der Anlage verwendet wird.

2. Computer implementiertes Verfahren gemäß einem der vorherigen Patentansprüche, **dadurch gekennzeichnet, dass** aus dem Eingabebild (13) mittels einer Objektmaskierung (31) zunächst alle Objekte gefiltert werden, welche vom Objektdetektor (21) als nicht-passend erkannt werden.

3. Computer implementiertes Verfahren gemäß einem der vorherigen Patentansprüche, **dadurch gekennzeichnet, dass** ein Objektdetektor genutzt wird um Schlüsselpunkte, die außerhalb eines Begrenzungsrahmens liegen zu maskieren.

4. Computer implementiertes Verfahren gemäß einem der vorherigen Patentansprüche, **dadurch gekennzeichnet, dass** das Objekt anhand von definierten Schlüsselpunkten (14) des Objekts identifiziert wird (33), wobei die Anzahl und die Lage des Schlüsselpunkts zueinander im aktuellen Eingabebild (13) mit den Schlüsselpunkten in der Referenzform verglichen (35, 34, 36) wird.

5. Computer implementiertes Verfahren gemäß einem der vorherigen Patentansprüche, **dadurch gekennzeichnet, dass** die Informationen der Referenzform durch ein CAD-Modell definiert werden.

6. Computer implementiertes Verfahren gemäß einem der vorherigen Patentansprüche 1 bis 4, **dadurch gekennzeichnet, dass** die Informationen, der Referenzform mittels einer technischen Zeichnung erfolgt

7. Computer implementiertes Verfahren gemäß einem der vorherigen Patentansprüche 1 bis 4, **dadurch gekennzeichnet, dass** die Informationen, der Referenzform durch Eingabe von geometrischen Formen erfolgt.

8. Computer implementiertes Verfahren gemäß einem der vorherigen Patentansprüche, **dadurch gekennzeichnet, dass** die Informationen über die Referenzform in 3D verwendet und mittels eine Projektionsmatrix auf eine 2D Ansicht passend zu einer Kamerasicht K reduziert werden.

9. Vorrichtung in einer industriellen Anlage zur Detektion eines Objekts (21) aus einem Eingabebild (13), durch ein neuronales Netz,

wobei das Objekt durch geometrische Formen umschrieben werden kann, und
dem System in einer Trainingsphase mittels Zusatz-Informationen (34) in Form einer Referenzform des gesuchten Objekts trainiert ist,
**dadurch gekennzeichnet, dass**
die Zusatz-Informationen zumindest eine der folgenden Informationen umfasst:

- Bilder mit Begrenzungsrahmen und Schlüsselpunkten des Objekts (14),
- Bilder mit Begrenzungsrahmen (15) des Objekts,
- Bilder ohne zusätzliche Anmerkungen, wobei

die Informationen (14, 15), während des Trainings iterativ, simultan oder sequenziell verwendet werden können, und wobei
die Vorrichtung (21) das trainierte neuronale Netz in der Produktivphase zur Steuerung der Anlage verwendet wird.

10. Vorrichtung (21) gemäß Patentanspruch 9,
**dadurch gekennzeichnet, dass**
weiterhin eine Objektmaskierung (31) vorhanden ist, welche aus dem Eingabebild (13) alle Objekte filtert, welche als nicht passend erkannt werden.

11. Vorrichtung gemäß Patentanspruch 9 oder 10
**Dadurch gekennzeichnet, dass**
der Objektdetektor (21) einen Objekt Begrenzungsrahmen definiert, mit dem die ausgeschlossenen Objekte mit Hilfe der Objektmaskierung aus dem Eingabebild maskiert werden.

12. Vorrichtung gemäß einem der Patentansprüche 9 bis 11,
**dadurch gekennzeichnet, dass**
der Objektdetektor (21) das Objekt anhand von definierten Schlüsselpunkten (14) des Objekts identifiziert (33), wobei ein Geometrie-Abgleicher (35) die Anzahl und die Lage des Schlüsselpunkts zueinander im aktuellen Eingabebild (13) mit den Schlüsselpunkten in der Referenzform vergleicht (34, 36).

13. Vorrichtung gemäß einem der Patentansprüche 9 bis 12,
**dadurch gekennzeichnet, dass**
die Informationen (14, 15) der Referenzform durch ein CAD-Modell definiert werden.

14. Vorrichtung gemäß einem der Patentansprüche 9 bis 13,
**dadurch gekennzeichnet, dass**
die Informationen (14, 15), der Referenzform zumindest eine technische Zeichnung erfolgt.

15. Vorrichtung gemäß einem der Patentansprüche 9 bis 14,
**dadurch gekennzeichnet, dass**
die Informationen (14, 15), der Referenzform durch Eingabe von Geometrischen Formen erfolgt.

16. Vorrichtung gemäß einem der Patentansprüche 9 bis 15,
**dadurch gekennzeichnet, dass**
die Informationen (14, 15) 3D-Formen verwenden, und mittels eine Projektionsmatrix auf eine 2D Ansicht passend zu einer Kamerasicht reduziert.

17. Computerprogrammprodukt, geeignet zur Ausführung der Schritte eines Verfahrens gemäß einem der Patentansprüche 1 bis 8.

18. Trainingsverfahren für ein Neuronales Netz geeignet zur Durchführung der Schritte eines Verfahrens gemäß einem der Patentansprüche 1 bis 8.

FIG 1

FIG 2

FIG 3

Europäisches
Patentamt

European
Patent Office

Office européen
des brevets

**EUROPÄISCHER RECHERCHENBERICHT**

Nummer der Anmeldung

**EP 23 19 8833**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | ZHIHONG CHEN ET AL: "Multi-task Detection System for Garbage Sorting Base on High-order Fusion of Convolutional Feature Hierarchical Representation", 2018 37TH CHINESE CONTROL CONFERENCE (CCC), TECHNICAL COMMITTEE ON CONTROL THEORY, CHINESE ASSOCIATION OF AUTOMATION, 25. Juli 2018 (2018-07-25), Seiten 5426-5430, XP033414999, DOI: 10.23919/CHICC.2018.8483842 [gefunden am 2018-10-05] * Title * * Zusammenfassung * * 3.3 Optimization; Seite 5428, Absatz 1 * * 5 Robotic grasping control; Seite 5429 * * 6 Experiments; Seite 5429, Absatz 1 * * Abbildung 6 * | 1-18 | INV.<br>G06V10/75<br>G06V10/82<br>G06V20/52 |
| A | US 2020/202554 A1 (MALISIEWICZ TOMASZ JAN [US] ET AL) 25. Juni 2020 (2020-06-25) * das ganze Dokument * | 1-18 | RECHERCHIERTE SACHGEBIETE (IPC)<br><br>G06V |
| A | Jaiswal Ayush ET AL: "Keypoints-aware Object Detection", , 11. Dezember 2020 (2020-12-11), XP093121182, Gefunden im Internet: URL:http://proceedings.mlr.press/v148/jaiswal21a/jaiswal21a.pdf [gefunden am 2024-01-18] * das ganze Dokument * | 1-18 | |

Der vorliegende Recherchenbericht wurde für alle Patentansprüche erstellt

| Recherchenort | Abschlußdatum der Recherche | Prüfer |
|---|---|---|
| Den Haag | 19. Januar 2024 | Meier, Ueli |

**ANHANG ZUM EUROPÄISCHEN RECHERCHENBERICHT
ÜBER DIE EUROPÄISCHE PATENTANMELDUNG NR.**

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-01-2024

| Im Recherchenbericht angeführtes Patentdokument | Datum der Veröffentlichung | Mitglied(er) der Patentfamilie | | Datum der Veröffentlichung |
|---|---|---|---|---|
| US 2020202554 A1 | 25-06-2020 | AU | 2017361061 A1 | 23-05-2019 |
| | | AU | 2022202694 A1 | 19-05-2022 |
| | | CA | 3043352 A1 | 24-05-2018 |
| | | CN | 110168477 A | 23-08-2019 |
| | | CN | 115097937 A | 23-09-2022 |
| | | EP | 3542250 A1 | 25-09-2019 |
| | | IL | 266482 A | 31-07-2019 |
| | | IL | 285121 A | 31-08-2021 |
| | | IL | 297846 A | 01-01-2023 |
| | | JP | 6854344 B2 | 07-04-2021 |
| | | JP | 7096925 B2 | 06-07-2022 |
| | | JP | 7151016 B2 | 11-10-2022 |
| | | JP | 2019536154 A | 12-12-2019 |
| | | JP | 2021108138 A | 29-07-2021 |
| | | JP | 2022126809 A | 30-08-2022 |
| | | KR | 20190085519 A | 18-07-2019 |
| | | KR | 20210075225 A | 22-06-2021 |
| | | KR | 20230170119 A | 18-12-2023 |
| | | US | 2018137642 A1 | 17-05-2018 |
| | | US | 2020202554 A1 | 25-06-2020 |
| | | US | 2021134000 A1 | 06-05-2021 |
| | | US | 2022237815 A1 | 28-07-2022 |
| | | WO | 2018093796 A1 | 24-05-2018 |

EPO FORM P0461

Für nähere Einzelheiten zu diesem Anhang : siehe Amtsblatt des Europäischen Patentamts, Nr.12/82